# EUROPÄISCHE PATENTSCHRIFT

(11) **EP 3 446 384 B1**
(45) Veröffentlichungstag und Bekanntmachung des Hinweises auf die Patenterteilung: **08.07.2020**
(21) Anmeldenummer: 17713892.2
(22) Anmeldetag: 20.03.2017
(51) Int. Cl.: H02M 7/00, H02G 5/00, H02P 27/06, H02M 1/00, H02M 7/5387

(54) **ANTRIEBSSYSTEM MIT EINER ZWISCHENKREISVERSCHIENUNG**
DRIVE SYSTEM WITH AN INTERMEDIATE CIRCUIT BUSBAR
SYSTÈME D'ENTRAÎNEMENT COMPRENANT UNE BARRE CONDUCTRICE DE CIRCUIT INTERMÉDIAIRE

(30) Priorität: 22.04.2016 DE 102016004884
(43) Veröffentlichungstag der Anmeldung: 27.02.2019
(73) Patentinhaber: SEW-EURODRIVE GmbH & Co. KG, 76646 Bruchsal (DE)
(72) Erfinder: KNELLER, Klaus, 76698 Ubstadt-Weiher (DE); OTT, Jürgen, 76706 Dettenheim (DE)
(86) Internationale Anmeldenummer: PCT/EP2017/025052
(87) Internationale Veröffentlichungsnummer: WO 2017/182129

(56) Entgegenhaltungen:
- DE-A1-102009 028 907
- KR-B1- 101 441 336
- US-A1- 2008 202 899
- US-A1- 2009 015 992

## Beschreibung

Die Erfindung betrifft ein Antriebssystem mit einer Zwischenkreisverschienung.

Es ist allgemein bekannt, dass bei ein Antrieb einen umrichtergespeisten Elektromotor aufweist, wobei der Umrichter einen Gleichrichter aufweist, dessen gleichspannungsseitiger Anschluss mit dem Zwischenkreis verbunden ist, und einen Wechselrichter, dessen gleichspannungsseitiger Anschluss mit dem Zwischenkreis verbunden ist.

**Aus der** US 2009/015992 A1 **ist als nächstliegender Stand der Technik ein Antriebssystem mit einer Zwischenkreisverschienung bekannt.**

**Aus der** US 2008/202899 A1 **ist ein Leistungsschaltteil mit laminiertem Bus bekannt.**

**Aus der** DE 10 2009 028907 A1 **ist eine Sammelschiene mit niedriger Induktivität bekannt.**

### Aus der KR 101 441 336 B1 sind ebenfalls Stromschienen bekannt.

Der Erfindung liegt daher die Aufgabe zugrunde, ein Antriebssystem mit Zwischenkreisverschienung kostengünstig herstellbar auszubilden.

Erfindungsgemäß wird die Aufgabe bei dem Antriebssystem nach den in Anspruch 1 angegebenen Merkmalen gelöst.

Wichtige Merkmale der Erfindung bei der Antriebssystem sind, dass es mit einer Zwischenkreisverschienung vorgesehen ist,
wobei die Zwischenkreisverschienung zumindest ein erstes Stromschienenadapterteil aufweist, an welchem zwei voneinander beabstandet Laschenabschnitte, insbesondere also Laschenbereiche, ausgeformt sind,
wobei einer der beiden Laschenabschnitte einen größeren Querschnitt, insbesondere Leitungsquerschnitt, insbesondere Leitungsquerschnitt zur Stromführung, aufweist als der andere der beiden Laschenabschnitte.

Von Vorteil ist dabei, dass das Antriebssystem kostengünstig herstellbar ist. Dabei ist das Stromschienenadapterteil vorteiligerweise mit zwei Querschnitten ausgebildet, so dass ein erster Wechselrichter verbindbar ist, der eine große elektrische Anschlussleistung benötigt und auch ein zweiter Wechselrichter, dessen benötigte elektrische Anschlussleistung kleiner ist. Somit genügt ein einziges Teil, um als Adapter zwischen dem Abschnitt der Zwischenkreisverschienung mit hohen Stromstärken und dem Abschnitt der Zwischenkreisverschienung mit kleineren Stromstärken zu fungieren.

Bei einer vorteilhaften Ausgestaltung weist die Zwischenkreisverschienung ein weiteres Stromschienenadapterteil auf, an welchem ebenfalls zwei voneinander beabstandete Laschenabschnitte, insbesondere also Laschenbereiche, ausgeformt sind,
wobei einer der beiden Laschenabschnitte des weiteren Stromschienenadapterteils einen größeren Querschnitt aufweist als der andere der beiden Laschenabschnitte des weiteren Stromschienenadapterteils. Von Vorteil ist dabei, dass die Zwischenkreisverschienung auch Wechselrichter und/oder ein Versorgungsmodul mit gleicher Anschlussleistung verbindet.

Bei einer vorteilhaften Ausgestaltung ist ein Isoliermittel zur elektrischen Isolation zwischen den beiden Stromschienenadapterteilen angeordnet und berührt beide,
insbesondere wobei die beiden Stromschienenadapterteile voneinander beabstandet sind. Von Vorteil ist dabei, dass eine niederinduktive Zwischenkreisverschienung erreicht ist. Denn zwischen den beiden Stromschienenadapterteilen, von denen ein erstes das obere Zwischenkreispotential und das andere das untere Zwischenkreispotential führt, ist nur das Isoliermittel angeordnet. Somit ist eine sehr große räumliche Nähe der beiden Stromschienen adapterteile erreichbar, so dass auch eine hohe Kapazität realisierbar ist. Auf diese Weise ist eine niederinduktive Zwischenkreisverschienung erreichbar.

Bei einer vorteilhaften Ausgestaltung ist das erste und/oder weitere Stromschienenadapterteil derart plattenförmig ausgeformt, dass der Abstand zwischen erstem und weiterem Stromschienenadapterteil kleiner, insbesondere mindestens zehnmal oder sogar hundertmal kleiner, ist als seine Ausdehnung in Querrichtung ist, insbesondere welche senkrecht zu der Verbindungslinie zwischen den Laschenabschnitten des ersten beziehungsweise weiteren Stromschienenadapterteils gerichtet ist und senkrecht zu der Beabstandungsrichtung zwischen dem ersten und weiteren Stromschienenadapterteil, also der durch den kleinsten Abstand zwischen den beiden Teilen vorgegebenen Verbindungslinie. Von Vorteil ist dabei, dass die Beabstandung zwischen den beiden Stromschienenadapterteilen sehr klein ausführbar ist, insbesondere im Vergleich zu der Breite des Stromschienenadapterteils, insbesondere in Querrichtung.

Bei einer vorteilhaften Ausgestaltung weist jeder Laschenabschnitt eine durchgehende Ausnehmung für Verbindungsschrauben auf. Von Vorteil ist dabei, dass eine einfache Verbindungstechnik kostengünstig anwendbar ist.

**Erfindungsgemäß** weisen die Zwischenkreisverschienung, also das Isoliermittel und jeder Stromschienenadapterteil, eine durchgehende Ausnehmung auf, durch welche ein Domabschnitt eines Halteteils, das mit einem Gehäuseteil des Antriebssystems, insbesondere mit einem Gehäuseteil eines Achsmoduls des Antriebssystems, verbunden ist, hindurchragt,
wobei ein insbesondere auf der von dem Gehäuseteil abgewandten Seite der Zwischenkreisverschienung angeordnetes Abdeckteil mit dem Domabschnitt verbunden ist. Von Vorteil ist dabei, dass eine einfache Befestigung einer isolierenden Abdeckung ermöglicht ist. Denn das Abdeckteil ist aus elektrisch isolierendem Kunststoff fertigbar. Ebenso ist der Domabschnitt aus einem solchen Werkstoff herstellbar. Vorteiligerweise ist somit mittels des Abdeckteils ein Berührschutz der Zwischenkreisverschienung realisierbar.

Bei einer vorteilhaften Ausgestaltung weist das Antriebssystem ein Versorgungsmodul, ein erstes und ein zweites Achsmodul auf,
wobei die Achsmodule aus dem Versorgungsmodul über die Zwischenkreisverschienung speisbar sind, insbesondere mit unipolarem Strom,
wobei das erste Achsmodul mittels einer ersten elektrischen Leitung, insbesondere Versorgungsleitung, mit der Zwischenkreisverschienung verbunden ist und das zweite Achsmodul mittels einer zweiten elektrischen Leitung, insbesondere Versorgungsleitung, mit der Zwischenkreisverschienung verbunden ist,
wobei die erste elektrische Leitung einen größeren Leitungsquerschnitt aufweist als die zweite elektrische Leitung. Von Vorteil ist dabei, dass das Stromschienenadapterteil einen Übergang von dem Bereich der Zwischenkreisverschienung mit hoher Stromstärke zu einem Bereich der Zwischenkreisverschienung mit niedrigerer Stromstärke ermöglicht.

Bei einer vorteilhaften Ausgestaltung weist das Versorgungsmodul einen Gleichrichter oder AC/DC-Wandler auf, dessen gleichspannungsseitiger Anschluss mit der Zwischenkreisverschienung verbunden ist,
wobei das erste Achsmodul einen ersten Wechselrichter aufweist,
wobei das zweite Achsmodul einen zweiten Wechselrichter aufweist,
insbesondere wobei der erste Wechselrichter eine größere maximale Ausgangsleistung aufweist als der zweite Wechselrichter. Von Vorteil ist dabei, dass das Versorgungsmodul Gleichspannung zur Verfügung stellt und somit die Achsmodule mit Gleichspannung versorgbar sind - entweder aus dem Versorgungsmodul oder einem generatorisch arbeitenden Achsmodul.

Bei einer vorteilhaften Ausgestaltung weist die Zwischenkreisverschienung Stromschienen zur elektrischen Verbindung des Versorgungsmoduls mit dem ersten Achsmodul auf,
wobei an jeder der Stromschienen voneinander beabstandete Laschenabschnitte ausgeformt sind,
wobei die Laschenabschnitte jeweils denselben Querschnitt, insbesondere Leitungsquerschnitt, insbesondere Leitungsquerschnitt zur Stromführung, aufweisen. Von Vorteil ist dabei, dass die Zwischenkreisverschienung abhängig von dem benötigten Strom realisierbar ist.

Bei einer vorteilhaften Ausgestaltung ist der Querschnitt, insbesondere Leitungsquerschnitt, insbesondere Leitungsquerschnitt zur Stromführung, jeweils der minimalste Leitungsquerschnitt, welcher zur Stromleitung verwendet wird.

Bei einer vorteilhaften Ausgestaltung ist eines oder mehrere der Achsmodule rückspeisefähig,
insbesondere also bei generatorischem Betrieb des vom jeweiligen Wechselrichter gespeisten Elektromotors über die Zwischenkreisverschienung elektrische Leistung dem Versorgungsmodul und/oder einem anderen Achsmodul zuführbar ist. Von Vorteil ist dabei, dass weniger Energie ins Netz zurückgespeist werden muss und somit geringere Verluste anfallen.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine Zwischenkreisverschienung für ein Antriebssystem gezeigt, wobei die Stromschienen (4, 5, 6, 7, 8, 9) denselben Querschnitt aufweisen.

In der Figur 2 ist eine erfindungsgemäße Zwischenkreisverschienung gezeigt, die im Unterschied zur Figur 1 unterschiedliche Querschnitte aufweist.

In der Figur 3 ist eine niederinduktive Stromschienenanordnung gezeigt.

In der Figur 4 ist eine niederinduktive Stromschienenanordnung gezeigt, die als Adapter zwischen großem und kleinem Querschnitt der Zwischenkreisverschienung fungiert.

Wie in den Figuren dargestellt, betrifft die Erfindung ein Antriebssystem mit Zwischenkreisverschienung.

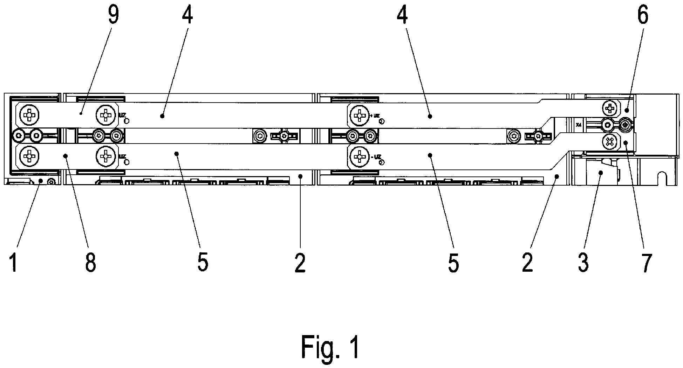

In Figur 1 ist ein Antriebssystem gezeigt, welches ein Versorgungsmodul 1, zwei erste Achsmodule 2 und ein zweites Achsmodul 3 aufweist. Dabei umfasst das Versorgungsmodul 1 einen von einem Wechselstromnetz gespeisten Gleichrichter, dessen gleichspannungsseitigen Anschlüsse mittels einer Zwischenkreisverschienung mit den Achsmodulen (2, 3) verbunden ist. Die ersten Achsmodule 2 weisen vorzugsweise Wechselrichter auf, die jeweils einen Elektromotor speisen. Somit ist die Drehzahl und/oder das Drehmoment des jeweiligen Elektromotors mittels des Wechselrichters regelbar.

Die Zwischenkreisverschienung ermöglicht ein Austauschen von Energie zwischen den Modulen. Bei Ausführung des Versorgungsmoduls 1 mit einer Rückspeiseeinheit ist sogar ein Rückspeisen von Energie aus der Zwischenkreis in das Wechselstromnetz ermöglicht.

Das jeweilige erste Achsmodul 2 ist zu einer größeren Leistungsaufnahme vorgesehen als das zweite Achsmodul 3. Somit ist auch der vom ersten Achsmodul 2 aufgenommene Strom größer als der vom zweiten Achsmodul 3 aufgenommene.

Die Zwischenkreisverschienung weist zwei Stromschienen (4,5) auf, die vom Versorgungsmodul 1 zum ersten der beiden ersten Achsmodule 2 vorgesehen sind. Dieselben Stromschienen (4, 5) sind auch zur elektrischen Verbindung der beiden ersten Achsmodule 2 vorgesehen. Der Querschnitt der beiden Stromschienen (4, 5) ist somit jeweils gleich.

Zur elektrischen Verbindung zwischen dem zweiten der ersten Achsmodule 2 und dem zweiten Achsmodul 3 sind Stromschienen (6, 7) vorgesehen, die einen kleineren Querschnitt aufweisen als die Stromschienen (4, 5). Somit ist zum zweiten Achsmodul 3 nur ein geringerer Strombetrag durchleitbar.

Die Induktivität dieser Zwischenkreisverschienung ist nicht vernachlässigbar, da die beiden Stromschienen (4, 5, 6, 7) jeweils parallel voneinander angeordnet sind, voneinander beabstandet sind und die Beträge der in ihnen fließenden Strömen gleich, die Stromrichtungen der hin ihnen fließenden Ströme jedoch entgegen gesetzt. Außerdem weisen die beiden jeweils einander zugeordneten Stromschienen (4, 5, beziehungsweise 6, 7) verschieden hohes Potential auf, nämlich das obere beziehungsweise das untere Zwischenkreispotential.

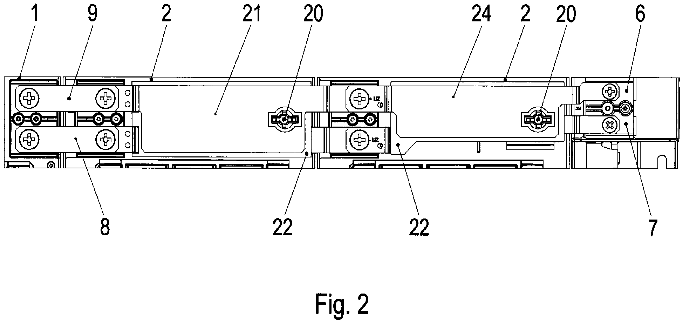

Wie in Figur 2 gezeigt, wird die dortige Zwischenkreisverschienung niederinduktiv ausgeführt. Hierzu sind die Stromschienen nun als oberes und unteres plattenförmiges Stromschienenteil 21 ausgeführt, wobei ein plattenförmiges isolierteil 22 zwischengeordnet ist, insbesondere also ein Stromschienenplattenteil.

Beide Stromschienenteile 21 berühren das Isolierteil 22. Dabei berührt das erste Stromschienenteil 21 das isolierteil 22 auf einer ersten Seite des Isolierteils 22 und das andere Stromschienenteil 21 das Isolierteil 22 auf der anderen Seite des Isolierteils 22.

Durch die plattenförmige Ausführung, also die größere Ausdehnung der Stromschienenteile 21 und des Isolierteils 22 in Querrichtung zur Schienenrichtung der Stromschienen 21 im Vergleich zum Abstand der beiden Isolierteile 22 zueinander, ist eine sehr niederinduktive Zwischenkreisverschienung erreicht.

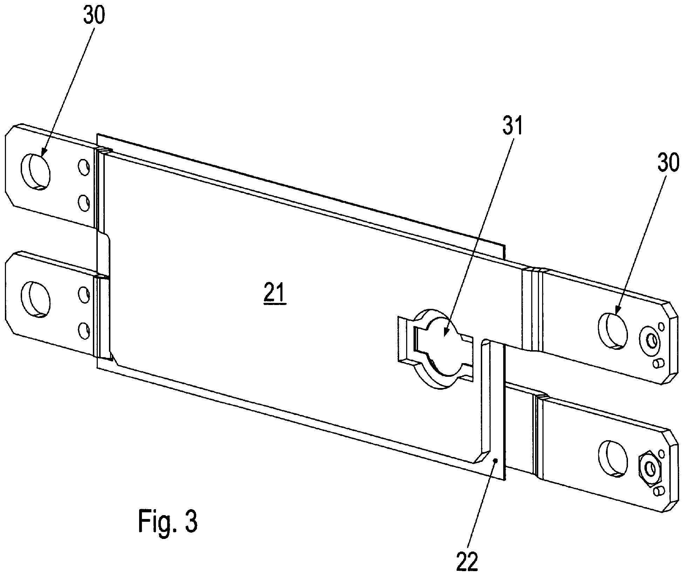

Wie in Figur 3 gezeigt, weisen die Stromschienenteile 21 in Schienenrichtung vorne und hinten jeweils Laschenabschnitte, insbesondere also Laschenbereiche, auf, deren Querschnitte betragsgleich sind. Somit sind mit diesen Stromschienenteilen 21 das Versorgungsmodul 1 mit dem ersten Achsmodul elektrisch verbindbar. Denn die in die Zwischenkreisverschienung eingespeisten oder herausgeführten Strombeträge dieser beiden Module sind gleich groß.

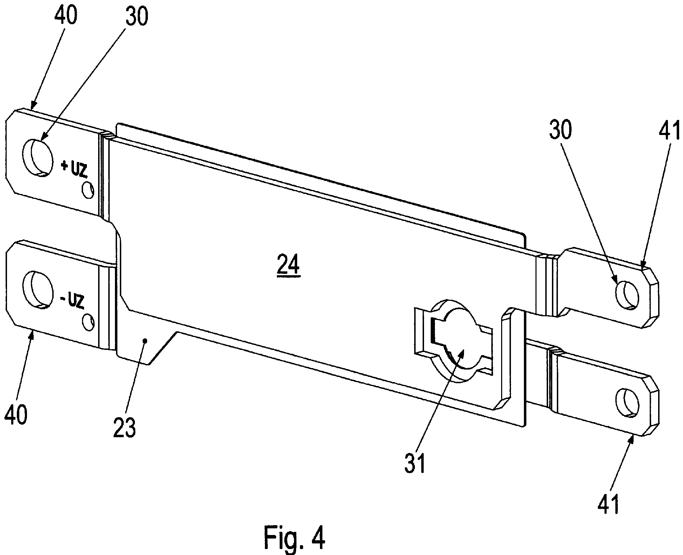

Wie in Figur 4 gezeigt, weisen die Stromschienenadapterteile 24 in Schienenrichtung vorne jeweils einen Laschenabschnitt 40 auf, dessen Querschnitt größer ist als der Querschnitt eines jeweiligen Laschenabschnitts 41, welcher in Schienenrichtung hinten am jeweiligen Stromschienenadapterteil 24 ausgeformt ist.

Jedes der Stromschienenadapterteile 24 ist ebenso wie die stromschienenteile 21 als Stanz-Biegeteil ausgeführt.

Ein erstes Stromschienenadapterteil 24 führt das obere Zwischenkreispotential und das auf der anderen Seite des zwischengeordneten Isolierteils 23 angeordneten, anderen Stromschienenadapterteils 24 führt das untere Zwischenkreispotential. Die beiden Stromschienenadapterteile 24 berühren also das zwischen ihnen angeordnete, also zwischengeordnete, Isolierteil 23.

Die Zwischenkreisverschienung ist hierbei auch wiederum niederinduktiver als in der Ausführung nach Figur 1, weil der Abstand zwischen den beiden Stromschienenadapterteilen 24 gemäß Figur 4 kleiner, insbesondere mindestens zehnmal oder sogar mindestens hundertmal kleiner, als die Ausdehnung der jeweiligen Stromschienenadapterteile 24 in Querrichtung zur Schienenrichtung ist.
Die Querrichtung ist dabei nicht nur senkrecht zur Schienenrichtung der Stromschienen, also auch zur Schienenrichtung der Stromschienenadapterteile, sondern auch senkrecht zur Beabstandungsrichtung, also Normalen der Plattenebene des plattenförmigen Stromschienenadapterteils.

Somit ist eine niederinduktive Zwischenkreisverschienung ermöglicht, die nach in Schienenrichtung vorne einen viel größeren Querschnitt zur Durchleitung von Strom aufweist als nach in Schienenrichtung hinten. Somit ist ein entsprechend größerer Strom vom ersten Achsmodul 2 einleitbar als vom am Laschenabschnitt 41 mit kleinerem Querschnitt elektrisch angeschlossenen zweiten Achsmodul 3.

Trotzdem ist auch das zweite Achsmodul 3 mittels des plattenförmig verbreitert ausgeführten Stromschienenadapterteils 24 niederinduktiv angeschlossen an den Zwischenkreis, insbesondere also auch an die Zwischenkreisverschienung.

Die plattenförmige Verbreiterung der Stromschienenadapterteile 24 ist dadurch erreicht, dass die Ausdehnung in Querrichtung im zwischen dem vorne ausgeformten Laschenabschnitt 40 und dem hinten ausgeformten Laschenabschnitt 41 angeordneten Abschnitt des Stromschienenadapterteils 24 in Querrichtung größer ist als die Ausdehnung in Querrichtung beider Laschenabschnitte (40, 41) ist, insbesondere sogar größer als die Summe der Ausdehnungen in Querrichtung der beiden Laschenabschnitte 40 und 41.

Innerhalb des plattenförmig verbreiterten Bereichs der Stromschienenadapterteile 24 ist eine durchgehende Ausnehmung jeweils angeordnet, die auch entsprechend im Isolierteil 23 ausgeführt ist. Hierdurch weist also die Zwischenkreisverschienung insgesamt eine durchgehende Ausnehmung auf, durch welche ein Domabschnitt 20 eines Tragteils hindurchragt, wobei das Tragteil aus Kunststoff gefertigt ist und mit einem Gehäuseteil des ersten Achsmoduls 2 verbunden ist, insbesondere an dieses angeschraubt ist.

Somit ist ein in der Figur nicht gezeigtes Abdeckteil von der vom Gehäuseteil abgewandten Seite der Zwischenkreisverschienung her kommend mit dem Domabschnitt 20 verbindbar, insbesondere schraubverbindbar, und somit die Zwischenkreisverschienung gehäusebildend oder zumindest gegen Berührung schützend umgebbar.

Die Laschenabschnitte 40 und 41 weisen jeweils ebenfalls eine durchgehende Ausnehmung auf, so dass ein Durchführen von Schrauben ermöglicht ist und somit diese Laschenabschnitte (40, 41) mit den entsprechenden Laschenabschnitten des benachbarten Stromschienenteils 21 elektrisch verbindbar sind, indem ein jeweiliger Laschenabschnitte (40, 41) mit einem jeweiligen entsprechenden Laschenabschnitt des jeweiligen Stromschienenteils 21 verbindbar ist, indem eine Schraube in den Verbindungsbereich durch die durch die Ausnehmungen 31 geführten und mit dem Gehäuseteil direkt oder indirekt schraubverbundenen Schrauben mit ihren Schraubenköpfen die Laschenabschnitte aufeinander drücken und in Richtung auf das Gehäuseteil hin andrücken.

### Bezugszeichenliste

1 Versorgungsmodul
2 erstes Achsmodul, insbesondere erster Wechselrichter
3 zweites Achsmodul, insbesondere zweiter Wechselrichter
4 erste Stromschiene
5 zweite Stromschiene
6 dritte Stromschiene
7 vierte Stromschiene
8 fünfte Stromschiene
9 sechste Stromschiene
20 Domabschnitt eines Tragteils
21 oberes Stromschienenteil, insbesondere Stromschienenplattenteil
22 Isolierteil, insbesondere Isolierplattenteil
24 oberes Stromschienenadapterteil, insbesondere Stromschienenadapterplattenteil
23 Isolierteil, insbesondere Isolierplattenteil
30 durchgehende Ausnehmung für Verbindungsschraube
31 durchgehende Ausnehmung für Domabschnitt
40 erster Laschenabschnitt
41 zweiter Laschenabschnitt

## Patentansprüche

1. Antriebssystem mit einer Zwischenkreisverschienung,
**wobei** die Zwischenkreisverschienung zumindest ein erstes Stromschienenadapterteil (24) aufweist, an welchem zwei voneinander beabstandet Laschenabschnitte, insbesondere also Laschenbereiche, ausgeformt sind,
wobei einer der beiden Laschenabschnitte einen größeren Querschnitt, insbesondere Leitungsquerschnitt, insbesondere Leitungsquerschnitt zur Stromführung, aufweist als der andere der beiden Laschenabschnitte,
**dadurch gekennzeichnet, dass**
**die Zwischenkreisverschienung, also das Isoliermittel und jeder Stromschienenadapterteil (24), eine durchgehende Ausnehmung aufweisen, durch welche ein Domabschnitt (20) eines Halteteils, das mit einem Gehäuseteil des Antriebssystems, insbesondere mit einem Gehäuseteil eines Achsmoduls des Antriebssystems, verbunden ist hindurchragt,**
**wobei ein auf der von dem Gehäuseteil abgewandten Seite der Zwischenkreisverschienung angeordnetes Abdeckteil mit dem Domabschnitt (20) verbunden ist.**

2. Antriebssystem nach Anspruch 1,
**dadurch gekennzeichnet, dass**
die Zwischenkreisverschienung ein weiteres Stromschienenadapterteil (24) aufweist, an welchem ebenfalls zwei voneinander beabstandet Laschenabschnitte, insbesondere also Laschenbereiche, ausgeformt sind,
wobei einer der beiden Laschenabschnitte des weiteren Stromschienenadapterteils (24) einen größeren Querschnitt aufweist als der andere der beiden Laschenabschnitte des weiteren Stromschienenadapterteils.

3. Antriebssystem nach mindestens einem der vorangegangenen Ansprüche,
**dadurch gekennzeichnet, dass**
ein Isoliermittel zur elektrischen Isolation zwischen den beiden Stromschienenadapterteilen (24) angeordnet ist und beide berührt,
wobei die beiden Stromschienenadapterteile (24) voneinander beabstandet sind.

4. Antriebssystem nach mindestens einem der vorangegangenen Ansprüche,
**dadurch gekennzeichnet, dass**
das erste und/oder weitere Stromschienenadapterteil (24) derart plattenförmig ausgeformt ist, dass der Abstand zwischen erstem und weiterem Stromschienenadapterteil (24) kleiner, insbesondere mindestens zehnmal oder sogar hundertmal kleiner, ist als seine Ausdehnung in Querrichtung ist, insbesondere welche senkrecht zu der Verbindungslinie zwischen den Laschenabschnitten des ersten beziehungsweise weiteren Stromschienenadapterteils gerichtet ist und senkrecht zu der Beabstandungsrichtung zwischen dem ersten und weiteren Stromschienenadapterteil (24), also der durch den kleinsten Abstand zwischen den beiden Teilen vorgegebenen Verbindungslinie.

5. Antriebssystem nach mindestens einem der vorangegangenen Ansprüche,
**dadurch gekennzeichnet, dass**
jeder Laschenabschnitt (40, 41) eine durchgehende Ausnehmung für Verbindungsschrauben aufweist.

6. Antriebssystem nach mindestens einem der vorangegangenen Ansprüche,
**dadurch gekennzeichnet, dass**
das Antriebssystem ein Versorgungsmodul (1), ein erstes und ein zweites Achsmodul (2, 3) aufweist,
wobei die Achsmodule (2, 3) aus dem Versorgungsmodul (1) über die Zwischenkreisverschienung speisbar sind, insbesondere mit unipolarem Strom,
wobei das erste Achsmodul (2) mittels einer ersten elektrischen Leitung, insbesondere Versorgungsleitung, mit der Zwischenkreisverschienung verbunden ist und das zweite Achsmodul mittels einer zweiten elektrischen Leitung, insbesondere Versorgungsleitung, mit der Zwischenkreisverschienung verbunden ist,
wobei die erste elektrische Leitung einen größeren Leitungsquerschnitt aufweist als die zweite elektrische Leitung.

7. Antriebssystem nach mindestens einem der vorangegangenen Ansprüche,
**dadurch gekennzeichnet, dass**
das Versorgungsmodul (1) einen Gleichrichter oder AC/DC-Wandler aufweist, dessen gleichspannungsseitiger Anschluss mit der Zwischenkreisverschienung verbunden ist,
wobei das erste Achsmodul (2) einen ersten Wechselrichter aufweist,
wobei das zweite Achsmodul einen zweiten Wechselrichter aufweist,
insbesondere wobei der erste Wechselrichter eine größere maximale Ausgangsleistung aufweist als der zweite Wechselrichter.

8. Antriebssystem nach mindestens einem der vorangegangenen Ansprüche,
**dadurch gekennzeichnet, dass**
die Zwischenkreisverschienung Stromschienen (4, 5, 6, 7, 8, 9) zur elektrischen Verbindung des Versorgungsmoduls (1) mit dem ersten Achsmodul (2) aufweist,
wobei an jeder der Stromschienen (4, 5, 6, 7, 8, 9) voneinander beabstandete Laschenabschnitte ausgeformt sind,
wobei die Laschenabschnitte jeweils denselben Querschnitt, insbesondere Leitungsquerschnitt, insbesondere Leitungsquerschnitt zur Stromführung, aufweisen.

9. Antriebssystem nach mindestens einem der vorangegangenen Ansprüche,
**dadurch gekennzeichnet, dass**
der Querschnitt, insbesondere Leitungsquerschnitt, insbesondere Leitungsquerschnitt zur Stromführung, jeweils der minimalste Leitungsquerschnitt ist, welcher zur Stromleitung verwendet wird.

10. Antriebssystem nach mindestens einem der vorangegangenen Ansprüche,
**dadurch gekennzeichnet, dass**
eines oder mehrere der Achsmodule (2, 3) rückspeisefähig ist,
insbesondere also bei generatorischem Betrieb eines vom jeweiligen Wechselrichter gespeisten Elektromotors über die Zwischenkreisverschienung elektrische Leistung dem Versorgungsmodul (1) und/oder einem anderen Achsmodul zuführbar ist.

## Claims

1. Drive system comprising a DC link busbar arrangement,
the DC link busbar arrangement having at least one first busbar adapter part (24), on which two spaced-apart lug portions, i.e. in particular lug regions, are formed,
one of the two lug portions having a larger cross section, in particular conductor cross section, in particular conductor cross section for carrying current, than the other of the two lug portions,
**characterised in that**
the DC link busbar arrangement, i.e. the insulating means and each busbar adapter part (24), has a through-opening, through which there passes a dome portion (20) of a retaining part connected to a housing part of the drive system, in particular to a housing part of an axle module of the drive system,
a cover part, arranged on the side of the DC link busbar arrangement facing away from the housing part, being connected to the dome portion (20).

2. Drive system according to claim 1,
**characterised in that**
the DC link busbar arrangement has a further busbar adapter part (24), on which two spaced-apart lug portions, i.e. in particular lug regions, are likewise formed,
one of the two lug portions of the further busbar adapter part (24) having a larger cross section than the other of the two lug portions of the further busbar adapter part.

3. Drive system according to at least one of the preceding claims,
**characterised in that**
an insulating means for electrical insulation is arranged between the two busbar adapter parts (24) and is in contact with both parts,
the two busbar adapter parts (24) being spaced apart from one another.

4. Drive system according to at least one of the preceding claims,
**characterised in that**
the first and/or further busbar adapter part (24) is/are formed in a plate-like manner such that the distance between the first and further busbar adapter parts (24) is smaller, in particular at least 10 times or 100 times smaller, than the extent thereof in the transverse direction, which in particular is oriented perpendicularly to the connecting line between the lug portions of the first and further busbar adapter parts and perpendicularly to the spacing direction between the first and further busbar adapter parts (24), i.e. to the connecting line specified by the shortest distance between the two parts.

5. Drive system according to at least one of the preceding claims,
**characterised in that**
each lug portion (40, 41) has a through-opening for connection screws.

6. Drive system according to at least one of the preceding claims,
**characterised in that**
the drive system has a power supply module (1) and a first and a second axle module (2, 3), the axle modules (2, 3) being able to be fed, in particular with unipolar current, from the power supply module (1) by means of the DC link busbar arrangement,
the first axle module (2) being connected to the DC link busbar arrangement by means of a first electrical conductor, in particular a power supply conductor, and the second axle module being connected to the DC link busbar arrangement by means of a second electrical conductor, in particular a power supply conductor,
the first electrical conductor having a larger conductor cross section than the second electrical conductor.

7. Drive system according to at least one of the preceding claims,
**characterised in that**
the power supply module (1) has a rectifier or an AC/DC converter, the DC-voltage-side terminal of which is connected to the DC link busbar arrangement,
the first axle module (2) having a first inverter,
the second axle module having a second inverter,
the first inverter in particular having a higher maximum output power than the second inverter.

8. Drive system according to at least one of the preceding claims,
**characterised in that**
the DC link busbar arrangement has busbars (4, 5, 6, 7, 8, 9) for electrically connecting the power supply module (1) to the first axle module (2),
spaced-apart lug portions being formed on each of the busbars (4, 5, 6, 7, 8, 9),
the lug portions each having the same cross section, in particular conductor cross section, in particular conductor cross section for carrying current.

9. Drive system according to at least one of the preceding claims,
**characterised in that**
the cross section, in particular the conductor cross section, in particular the conductor cross section for carrying current, is in each case the minimum conductor cross section used for current conduction.

10. Drive system according to at least one of the preceding claims,
**characterised in that**
one or more of the axle modules (2, 3) are regenerative,
electrical power therefore in particular being able to be supplied to the power supply module (1) and/or to a different axle module by means of the DC link busbar arrangement when an electric motor fed by the relevant inverter is operated in generator mode.

## Revendications

1. Système d'entraînement comprenant un jeu de barres de circuit intermédiaire,
dans lequel le jeu de barres de circuit intermédiaire présente au moins une première partie d'adaptation de barre conductrice (24) sur laquelle sont formés deux segments formant languette, en particulier zones formant languette, espacés l'un de l'autre,
dans lequel l'un des deux segments formant languette présente une section, en particulier une section de conducteur, en particulier une section de conducteur pour la conduction de courant plus grande que l'autre des deux segments formant languette, **caractérisé en ce**
**que** le jeu de barres de circuit intermédiaire, c'est-à-dire le moyen d'isolation et chaque partie d'adaptation de barre conductrice (24), présente un évidement traversant à travers lequel fait saillie un segment formant dôme (20) d'une partie de maintien qui est reliée à une partie carter du système d'entraînement, en particulier à une partie carter d'un module d'axe du système d'entraînement,
dans lequel une partie de recouvrement disposée du côté du jeu de barres de circuit intermédiaire opposé à la partie carter est reliée au segment formant dôme (20).

2. Système d'entraînement selon la revendication 1,
**caractérisé en ce**
**que** le jeu de barres de circuit intermédiaire présente une autre partie d'adaptation de barre conductrice (24) sur laquelle sont également formés deux segments formant languette, en particulier zones formant languette, espacés l'un de l'autre,
dans lequel l'un des deux segments formant languette de l'autre partie d'adaptation de barre conductrice (24) présente une section plus grande que l'autre des deux segments formant languette de l'autre partie d'adaptation de barre conductrice.

3. Système d'entraînement selon au moins l'une des revendications précédentes,
**caractérisé en ce**
**qu'**un moyen d'isolation pour l'isolation électrique est disposé entre les deux parties d'adaptation de barre conductrice (24) et est en contact avec les deux,
dans lequel les deux parties d'adaptation de barre conductrice (24) sont espacées l'une de l'autre.

4. Système d'entraînement selon au moins l'une des revendications précédentes,
**caractérisé en ce**
**que** la première et/ou l'autre partie d'adaptation de barre conductrice (24) est réalisée en forme de plaque de telle sorte que la distance entre la première et l'autre partie d'adaptation de barre conductrice (24) est plus petite, en particulier au moins dix fois ou même cent fois plus petite, que son étendue dans la direction transversale, qui est en particulier dirigée perpendiculairement à la ligne de liaison entre les segments formant languette de la première ou de l'autre partie d'adaptation de barre conductrice et perpendiculairement à la direction d'espacement entre la première et l'autre partie d'adaptation de barre conductrice (24), c'est-à-dire la ligne de liaison prédéfinie par la plus petite distance entre les deux parties.

5. Système d'entraînement selon au moins l'une des revendications précédentes,
**caractérisé en ce**
**que** chaque segment formant languette (40, 41) présente un évidement traversant pour des vis d'assemblage.

6. Système d'entraînement selon au moins l'une des revendications précédentes,
**caractérisé en ce**
**que** le système d'entraînement présente un module d'alimentation (1), un premier et un deuxième module d'axe (2, 3),
dans lequel les modules d'axe (2, 3) peuvent être alimentés à partir du module d'alimentation (1) par le jeu de barres de circuit intermédiaire, en particulier avec un courant unipolaire,
dans lequel le premier module d'axe (2) est relié au jeu de barres de circuit intermédiaire au moyen d'une première ligne électrique, en particulier ligne d'alimentation, et le deuxième module d'axe est relié au jeu de barres de circuit intermédiaire au moyen d'une deuxième ligne électrique, en particulier ligne d'alimentation,
dans lequel la première ligne électrique présente une section de conducteur plus grande que la deuxième ligne électrique.

7. Système d'entraînement selon au moins l'une des revendications précédentes,
**caractérisé en ce**
**que** le module d'alimentation (1) présente un redresseur ou un convertisseur alternatif-continu, dont le raccordement côté tension continue est relié au jeu de barres de circuit intermédiaire,
dans lequel le premier module d'axe (2) présente un premier onduleur,
dans lequel le deuxième module d'axe présente un deuxième onduleur,
en particulier dans lequel le premier onduleur a une puissance de sortie maximale supérieure à celle du deuxième onduleur.

8. Système d'entraînement selon au moins l'une des revendications précédentes,
**caractérisé en ce**
**que** le jeu de barres de circuit intermédiaire présente des barres conductrices (4, 5, 6, 7, 8, 9) pour la liaison électrique du module d'alimentation (1) au premier module d'axe (2),
dans lequel des segments formant languette espacés l'une de l'autre sont formés sur chacune des barres conductrices (4, 5, 6, 7, 8, 9),
dans lequel les segments formant languette présentent chacun la même section, en particulier section de conducteur, en particulier section de conducteur pour la conduction de courant.

9. Système d'entraînement selon au moins l'une des revendications précédentes,
**caractérisé en ce**
**que** la section, en particulier la section de conducteur, en particulier la section de conducteur pour la conduction de courant est dans chaque cas la section de conducteur minimale qui est utilisée pour la conduction de courant.

10. Système d'entraînement selon au moins l'une des revendications précédentes,
**caractérisé en ce**
**qu'**un ou plusieurs des modules d'axe (2, 3) sont régénératifs,
c'est-à-dire en particulier qu'en cas de fonctionnement en générateur d'un moteur électrique alimenté par l'onduleur respectif, de l'énergie électrique peut être fournie au module d'alimentation (1) et/ou à un autre module d'axe par l'intermédiaire du jeu de barres de circuit intermédiaire.
